# EUROPEAN PATENT APPLICATION

(11) **EP 2 320 434 A2**
(43) Date of publication of application: **11.05.2011**
(21) Application number: 09806826.5
(22) Date of filing: 11.08.2009
(51) Int. Cl.: H01F 1/032

(54) **METHOD FOR PRODUCING FERRITE**

(30) Priority: 13.08.2008 KR 20080079350
(71) Applicant: EMW Co., Ltd., Namdong-gu, Incheon 405-819 (KR)
(72) Inventor: RYU, Byung Hoon, Seoul 137-060 (KR); SUNG, Won Mo, Siheung-si Gyeonggi-do 429-450 (KR); KUM, Jun Sig, Seoul 120-130 (KR)
(74) Representative: Kling, Simone
(86) International application number: PCT/KR2009/004457
(87) International publication number: WO 2010/018964

(57) **Abstract**

Disclosed herein is a method for producing a ferrite which can achieve high efficiency even in a high frequency range. The method comprises the steps of: mixing barium nitrate (Ba(NO₃)₂), cobalt nitrate hexahydrate (Co(NO₃)₂·6H₂O) and ferric nitrate nonahydrate (Fe(NO₃)₃·9H₂O) at a ratio of 3:2:24 to form a liquid-phase mixture; co-precipitating the mixture with sodium hydroxide (NaOH) so as to be metalized; washing and drying the co-precipitated mixture; heat-treating the co-precipitated mixture; and adding aluminum oxide (Al₂O₃) to the mixture. The method can provide a high-efficiency ferrite having reduced permittivity, permeability, dielectric loss and permeability loss.

## Description

### Technical Field

The present invention relates to an antenna, and more particularly to a method for producing a ferrite, which can extend the frequency range of the ferrite to increase the efficiency of an antenna comprising the ferrite.

### Background Art

In general, the term "wireless device" refers to any device capable of transmitting and receiving information anywhere regardless of location, including mobile phones, palm PCs or PDAs (Personal Digital Assistants), or HPCs (Hand-Held PCs). In such wireless devices, antennas for transmitting and receiving electronic information through wireless communication are placed. In such antennas, RF (Radio Frequency) magnetic devices for wireless transmission and reception of information are placed.

The RF magnetic devices can be obtained using various types of ferrites. Among these ferrites, the Z-type or hexa-ferrite comprising Ba₃Co₂Fe₂₄O₄₁ can be used at several hundred MHz. This Z-type or hexa-ferrite has high permeability and high permittivity, and thus is advantageous for miniaturization of the antenna.

However, the RF magnetic device comprising the Z-type or hexa-ferrite has a problem in that it has a high permeability loss and a high dielectric loss at a frequency of a few hundred MHz or higher is unsuitable for use as a magnetic device. Also, in the case of small-sized antennas that have a high permeability and a high permittivity due to the use of the Z-type or hexa-ferrite, the efficiency of the antenna is reduced due to a reduced cross-sectional area. Accordingly, it is required to develop a method which can reduce the permeability loss and dielectric loss of the RF magnetic device to extend the frequency range and can also control the permeability and permittivity of the RF magnetic device to increase the efficiency of the antenna.

### Disclosure

### Technical Problem

The present invention has been made in view of the above-described problems, and an object of the present invention is to provide a method for producing a ferrite, which can reduce the permeability loss and dielectric loss of the ferrite to extend the frequency range of the ferrite.

Another object of the present invention is to provide a method for producing a ferrite, which can reduce the permeability and permittivity of the ferrite to increase the efficiency of an antenna comprising the ferrite.

### Technical Solution

To achieve the above objects, the present invention provides a method for producing a ferrite, the method comprising the steps of: a liquid-phase mixture having magnetic properties; metalizing the mixture; washing and drying the metalized mixture; heat-treating the washed and dried mixture; and adding aluminum oxide (A1₂0₃) to the heat-treated mixture.

In an embodiment of the present invention, the liquid-phase mixture is formed by mixing barium nitrate (Ba(NO₃)₂), cobalt nitrate hexahydrate (Co(NO₃)₂·6H₂O) and ferric nitrate nonahydrate (Fe(NO₃)₃·9H₂O) at a ratio of 3:2:24. The liquid-phase mixture is co-precipitated with sodium hydroxide (NaOH) so as to be metalized.

The metalized mixture is washed with distilled water and dried at a temperature between 110 **°C** and 130 **°C** for 24 hours. The dried mixture is heat-treated at a temperature between 900 **°C** and 1100 **°C** in a first heat-treatment step, and then further heat-treated at a temperature between 1250 **°C** and 1350 **°C** in a second heat-treatment step. After the first heat-treatment step, aluminum oxide is added to the heat-treated mixture in an amount of several wt% to several tens wt% based on the weight of the mixture. The ferrite formed by such a series of processes has a low permeability, a low permittivity, a low permeability loss and a low dielectric loss.

According to another aspect, the present invention provides a method for producing a ferrite, the method comprising the steps of: preparing a mixture formed of Ba₃Co₂Fe₂₄O₄₁; and adding to the mixture several percent to several tens of an additive comprising Al₂O₃. The step of preparing the mixture comprises the steps of: mixing barium nitrate (Ba(NO₃)₂), cobalt nitrate hexahydrate (Co(NO₃)₂·6H₂O) and ferric nitrate nonahydrate (Fe(NO₃)₃·9H₂O) at a ratio of 3:2:24 to form a liquid-phase mixture; co-precipitating the liquid-phase mixture; washing and drying the co-precipitated mixture; and heat-treating in two steps. The additive is added to the heat-treated mixture after the first heat-treatment step and is heat-treated in the second heat-treatment step.

### Advantageous Effects

According to the present invention, by adding aluminum oxide (Al₂O₃) to the mixture formed of Ba₃Co₂Fe₂₄O₄₁, the permeability loss and dielectric loss of the resulting ferrite can be reduced. Accordingly, the ferrite can be used even in the frequency range of several hundred MHz or higher, that is, several GHz.

Also, by adding aluminum oxide to the ferrite, the permeability and permittivity of the resulting ferrite can be reduced, thus increasing the efficiency of an antenna comprising the ferrite. In addition, by controlling the ratio of aluminum oxide that is added to the ferrite, the permittivity and permeability of the ferrite can be controlled to desired values.

### Description of Drawings

FIG. 1 is a process flow chart showing a method for producing a ferrite according to the present invention.
FIG. 2 is a schematic perspective view showing a ferrite produced according to the present invention.
FIG. 3 is a graphic diagram showing the permeability and permittivity of a ferrite produced according to the present invention.
FIG. 4 is a graphic diagram showing the permeability loss and dielectric loss of a ferrite produced according to the present invention.
FIG. 5 is a graphic diagram showing the return loss of a ferrite produced according to the present invention.

### Best Mode

Hereinafter, a preferred embodiment of the present invention will be described in detail with reference to the accompanying drawings.

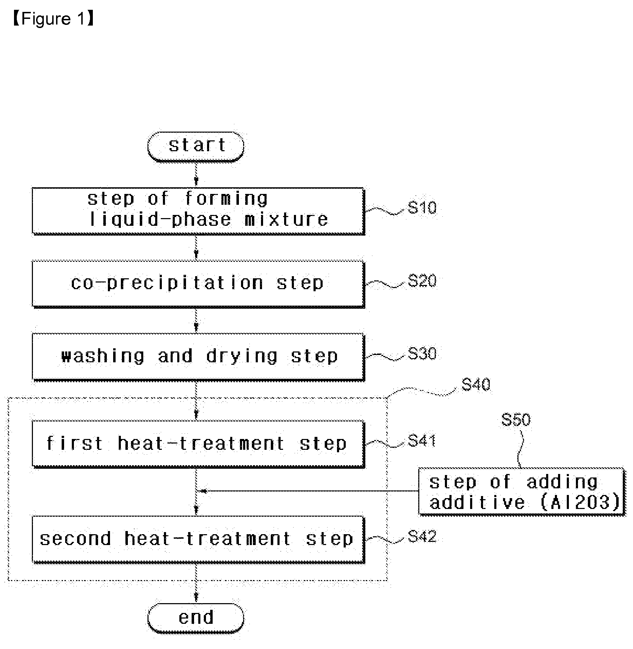

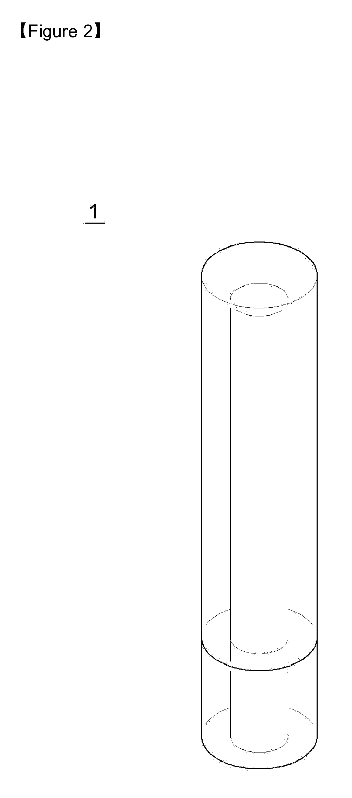

FIG. 1 is a process flow chart showing a method for producing a ferrite according to an embodiment of the present invention, and FIG. 2 shows a Z-type ferrite produced according to the production method shown in FIG. 1.

Referring to FIG. 1, the method for producing the ferrite according to the embodiment of the present invention comprises the steps of: (S10) forming a liquid-phase mixture; (S20) metalizing the liquid-phase mixture; (S30); washing and drying the metalized mixture; (S40) heat-treating the dried mixture; and (S50) adding an additive to the heat-treated mixture. Such steps will be sequentially described below.

As shown in FIG. 1, a liquid-phase mixture having magnetic properties is formed (S10). Herein, the mixture is formed by mixing barium nitrate (Ba(NO₃)₂), cobalt nitrate hexahydrate (Co(NO₃)₂·6H₂O) and ferric nitrate nonahydrate (Fe(NO₃)_{3·}9H₂O) at a given ratio. In this mixing step, barium nitrate (Ba(NO₃)₂), cobalt nitrate hexahydrate (Co(NO₃)₂·6H₂O) and ferric nitrate nonahydrate (Fe(NO₃)₃·9H₂O) are mixed at a ratio of 3:2:24.

The liquid-phase mixture formed as described above is metalized (S20). In this metallization step, the liquid-phase mixture is metalized using a co-precipitation method that is a phenomenon in which one substance co-precipitates with another substance or ion that did not reach its solubility. In an illustrative embodiment of the present invention, a co-precipitation method of adding sodium hydroxide (NaOH) to the mixture is used. It is to be understood, however, that the scope of the present invention is not limited only to the illustrative co-precipitation method, and any method capable of extracting a metal from the liquid-phase mixture may be used in the present invention.

The co-precipitated mixture is washed and dried (S30). Specifically, in the washing and drying step (S30), the co-precipitated and metalized mixture slurry is washed with distilled water. Then, the washed mixture is dried at a temperature between 110 **°C** and 130 **°C** for 24 hours. In an illustrative embodiment of the present invention, the washed mixture is dried in a dryer (not shown) at a temperature of 120 **°C**.

The washed and dried mixture is heat-treated (S40). The heat-treatment step (S40) consists of two steps: a first heat-treatment step (S41) that is carried out at a temperature between 900 **°C** and 1100 **°C**; and a second heat-treatment step (S42) that is carried out at a temperature between 1250 **°C** and 1350 **°C**. In an illustrative embodiment of the present invention, the first heat-treatment step (S41) is carried out at 1000 **°C**, and the second heat-treatment step (S42) is carried out at 1320 **°C**.

After the first heat-treatment step (S41), a step of adding an additive to the heat-treated mixture is carried out. The additive is aluminum oxide (Al₂O₃) and is added in an amount of several wt% to several tens wt% based on the weight of the mixture. Herein, the additive aluminum oxide is added in order to reduce the permeability loss, dielectric loss, permeability and permittivity of a ferrite to be produced.

After aluminum oxide has been added to the first-heat-treated mixture (S50), the mixture is further heat-treated (S42), thereby producing a ferrite 1 as shown in FIG. 2.

For reference, the ferrite produced according to the above-described production method is a ferrite comprising a mixture, formed of Ba₃Co₂Fe₂₄O₄₁, and aluminum oxide added in an amount of several wt% to several tens wt% relative to the weight of the mixture.

Table 1 below shows the change in performance of the ferrite 1, produced by the above-described steps, according to the content of the additive aluminum oxide.

**[Table 1]**

| Content (%) of aluminum oxide | 0% | 1% | 10% | 20% |
|---|---|---|---|---|
| Antenna size (mm) | 33 | 45 | 65 | 69 |
| Peak gain (dBi) | -4.8461 | 0.68978 | 4.6384 | 4.9542 |
| Efficiency (%) | 10.893 | 38.877 | 87.65 | 95.04 |

As can be seen in Table 1 above, as the content of aluminum oxide in the ferrite 1 increases from 0% to 1%, 10% and 20%, the antenna size gradually increases and the peak gain of the antenna also increases. In addition, as the content of aluminum oxide in the ferrite 1 increases, the efficiency of the ferrite also rapidly increases. Accordingly, the cross-sectional area of the antenna comprising the ferrite 1 produced according to the above-described production method can be increased, thus increasing the efficiency of the antenna.

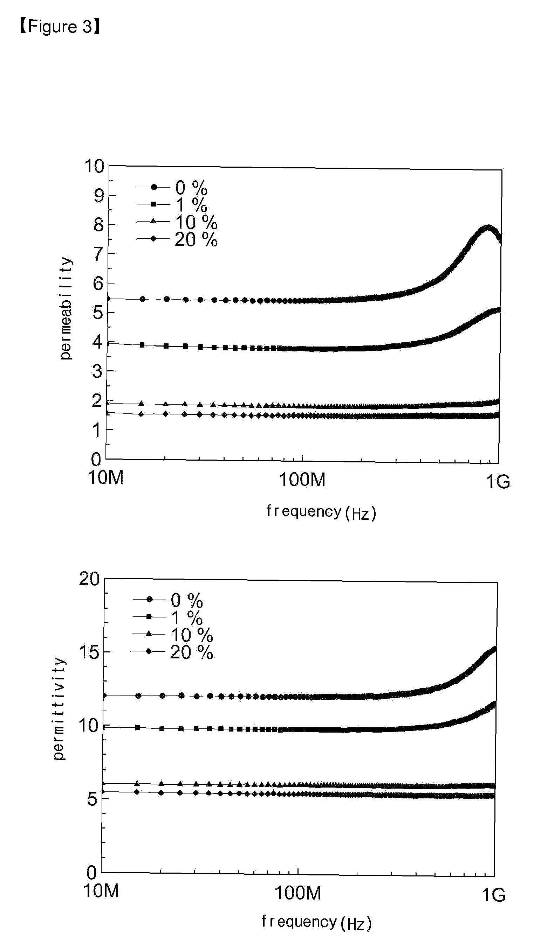

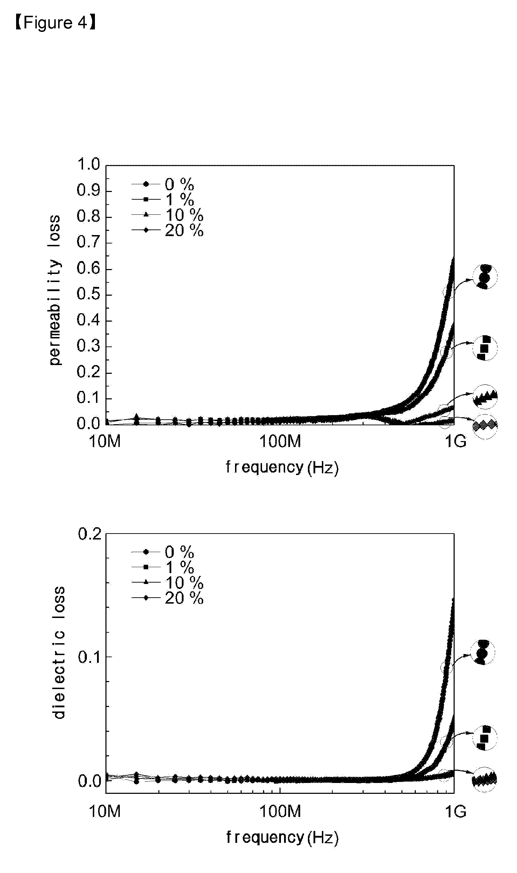

FIGS. 3 and 4 are graphic diagrams showing the permeability, permittivity, permeability loss and dielectric loss of the ferrite 1 produced according to the above-described production method. For reference, the terms "permeability", "permittivity,", "permeability loss" and "dielectric loss" refer to indicators of the performance of an antenna. Specifically, the term "permeability" refers the amount indicating the magnetic property of a material, and the term "permittivity" refers to the electrical property of a dielectric material, which indicates the amount of electric charge that can be stored. Also, the term "permeability loss" refers to the amount of magnetization loss, and the term "dielectric loss" indicates the amount of energy lost as heat in a dielectric material.

As can be seen in FIG. 3, as the content of aluminum oxide in the ferrite increases from 0% to 1%, 10% and 20%, the permeability and permittivity of the ferrite decrease and become constant regardless of the frequency range. In addition, as can be seen in FIG. 4, an increase in the content of aluminum oxide in the ferrite 1 leads to decreases in the permeability and dielectric loss of the ferrite 1. Accordingly, it can be seen that, when aluminum oxide is added to the mixture (Ba₃Co₂Fe₂₄O₄₁) constituting the ferrite 1, the permeability and permittivity of the ferrite 1 can be controlled and the permeability loss and dielectric loss thereof can be reduced, so that an antenna comprising the ferrite 1 can be used in a wider frequency range.

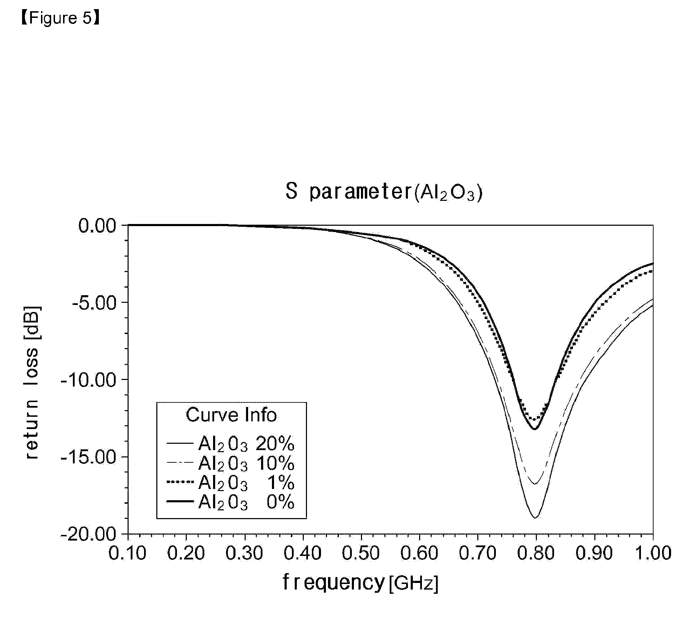

FIG. 5 is a graphic diagram showing return loss as a function of the content of aluminum oxide in the ferrite. As can be seen in FIG. 5, as the content of aluminum oxide in the ferrite increases from 0% to 1%, 10% and 20%, the return loss of the ferrite gradually decreases. Due to this decrease in the return loss, the ferrite can be used even in the frequency range of several GHz.

Although the preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A method for producing a ferrite, comprising the steps of:
forming a liquid-phase mixture having magnetic properties;
metalizing the mixture;
washing and drying the metalized mixture;
heat-treating the washed and dried mixture; and
adding aluminum oxide (Al₂O₃) to the heat-treated mixture.

2. The method of claim 1, wherein the step of forming the liquid-phase mixture is performed by mixing barium nitrate (Ba(NO₃)₂), cobalt nitrate hexahydrate (Co(NO₃)₂·6H₂O) and ferric nitrate nonahydrate (Fe(NO₃)₃·9H₂O) at a ratio of 3:2:24.

3. The method of claim 1, wherein the step of metalizing the mixture is performed by co-precipitating the liquid-phase mixture with sodium hydroxide (NaOH).

4. The method of claim 1, wherein the step of washing and drying the metalized mixture comprises the steps of:
washing the mixture with distilled water; and
drying the washed mixture at a temperature between 110 **°C** and 130 **°C** for 24 hours.

5. The method of claim 1, wherein the step of heat-treating the washed and dried mixture comprises:
a first heat-treatment step of heat-treating the dried mixture at a temperature between 900 **°C** and 1100 **°C**; and
a second heat-treatment step of heat-treating the heat-treated mixture at a temperature between 1250 **°C** and 1350 **°C.**

6. The method of claim 5, wherein the step of adding aluminum oxide to the heat-treated mixture is performed by adding aluminum oxide to the heat-treated mixture in an amount of several wt% to several tens wt% based on the weight of the heat-treated mixture, after the first heat-treatment step.

7. A method for producing a ferrite, comprising the steps of:
preparing a mixture formed of Ba₃Co₂Fe₂₄O₄₁; and
adding an additive of Al₂O₃ to the mixture.

8. The method of claim 7, wherein the step of preparing the mixture comprises the steps of:
mixing barium nitrate (Ba(NO₃)₂), cobalt nitrate hexahydrate (Co(NO₃)₂·6H₂O) and ferric nitrate nonahydrate (Fe(NO₃)₃·9H₂O) at a ratio of 3:2:24 to form a mixture;
co-precipitating the mixture;
washing and drying the co-precipitated mixture; and
heat-treating the dried mixture in two steps.

9. The method of claim 8, wherein the step of adding the additive is performed by adding the additive to the mixture after the first heat-treatment step of the two heat-treatment steps.
